# EUROPEAN PATENT APPLICATION

(11) **EP 2 018 979 A1**
(43) Date of publication of application: **28.01.2009**
(21) Application number: 07743164.1
(22) Date of filing: 11.05.2007
(51) Int. Cl.: B60C 17/06

(54) **RUN-FLAT SUPPORT BODY AND METHOD OF ASSEMBLING THE SAME**

(30) Priority: 12.05.2006 JP 2006133507
(71) Applicant: The Yokohama Rubber Co., Ltd., Minato-ku Tokyo 105-8685 (JP)
(72) Inventor: NAITO, Mitsuru, Hiratsuka-shi, Kanagawa 254-8601 (JP)
(74) Representative: HOFFMANN EITLE
(86) International application number: PCT/JP2007/059729
(87) International publication number: WO 2007/132762

(57) **Abstract**

A run-flat support body and a method assembling the same that improves reliability during running by eliminating mechanical joint components and realizes weight reduction and uniform mass-production are provided. The run-flat support body of the present invention comprises a pair of elastic rings fitted to a rim of a wheel and an annular shell bridging between these elastic rings. In the run-flat support body, the elastic rings and the annular shells are integrally joined, at least one discontinuous spot is provided in a circumference of the annular shell and the elastic rings, a connection structure is formed in which butted ends of the annular shell are joined together by welding, and joining between the annular shell and the elastic ring is partially released in the vicinity of a butted position of the annular shell. When the run-flat support body is inserted into a cavity portion of a pneumatic tire and the butted ends of the annular shell are joined together by welding, the welding work on a portion covered by the elastic ring is performed in a state where the elastic ring is retreated from the butted position of the annular shell.

## Description

### BACKGROUND OF THE INVENTION

### Field of the Invention

The present invention relates to a run-flat support body and a method of assembling the run-flat support body to a pneumatic tire that enables run-flat running and more particularly to a run-flat support body and a method of assembling the same that improves reliability during running by eliminating mechanical joint components and realizes weight reduction and uniform mass-distribution.

### Description of the Related Art

Many arts to enable emergency running to some degree even if a pneumatic tire runs flat during running of a vehicle have been proposed in response to market demand. Among these many proposals, there is a one that enables run-flat running by attaching a core on a rim in a cavity portion of a pneumatic tire and by supporting a punctured tire by the core (See Patent Document 1, for example).

Such run-flat support body includes an annular shell having an open-leg structure in which a contact portion against an inner face of a tire extends toward the outer periphery and leg portions are formed along both sides of the contact portion. Elastic rings are attached to the both leg portions so that the annular shell is mounted on a rim through the elastic rings. According to this run-flat support body, since it can be used as it is without adding any special modification to an existing wheel or rim, it has an advantage that it can be accepted by the market without any confusion.

When a tire-wheel assembly including the above run-flat support body is to be configured, it is necessary that the run-flat support body is inserted into a cavity portion of a pneumatic tire, and then the pneumatic tire is assembled on a rim with the run-flat support body included therein. However, since an outer diameter of the run-flat support body is larger than an inner diameter of a bead portion of the pneumatic tire, the work to insert the run-flat support body into the cavity portion of the pneumatic tire is extremely difficult. Particularly, the larger is the aspect ratio, the more difficult becomes the assembling work of the run-flat support body.

On the other hand, such an idea is proposed that at least one discontinuous spot is provided in a circumference of the run-flat support body, the run-flat support body is inserted into the cavity portion of the pneumatic tire in a state where the run-flat support body is disassembled or reduced in size of diameter and then, the discontinuous spot of the annular shell is connected by a mechanical joint component such as a bolt (See Patent Documents 2 to 4, for example).

However, if the discontinuous spot of the annular shell is connected using the mechanical joint component, there is a problem that the mass of the run-flat support body is increased and moreover, mass-distribution in circumferential direction becomes uneven. Also, since the mechanical joint component might be loosen due to vibration and the like during running, there is a problem of low reliability during running.
Patent Document 1: Japanese Patent Laid-Open No. 10-297226
Patent Document 2: Japanese Patent Laid-Open No. 2003-48410
Patent Document 3: Japanese Patent Laid-Open No. 2004-58866
Patent Document 4: Japanese Patent Laid-Open No. 2004-181987

### SUMMERY OF THE INVENTION

The present invention has an object to provide a run-flat support body and a method of assembling the same that improves reliability during running by eliminating mechanical joint components and realizes weight reduction and uniform mass-distribution.

A run-flat support body of the present invention in order to achieve the above object comprises a pair of elastic rings fitted to a rim of a wheel and an annular shell bridging between the elastic rings, and in the run-flat support body, the elastic rings and the annular shell are integrally joined, at least one discontinuous spot is provided in a circumference of the annular shell and the elastic rings, a connection structure is formed in which butted ends of the annular shell are joined by welding, and the joining between the annular shell and the elastic ring is partially released in the vicinity of the butted position of the annular shell.

Also, a method of assembling the run-flat support body of the present invention is characterized in that the above-mentioned run-flat support body is inserted into a cavity portion of a pneumatic tire, and when the butted ends of the annular shell are to be joined by welding, the welding work on a portion covered by the elastic ring is performed while the elastic rings are retreated from the butted position of the annular ring.

In the present invention, the run-flat support body has its outer diameter formed smaller than an inner diameter of a tread portion of a pneumatic tire so as to keep a constant distance from the pneumatic tire and has its inner diameter formed with substantially the same dimension as the inner diameter of the bead portion of the pneumatic tire. This run-flat support body is assembled to a rim of a wheel together with the pneumatic tire while being inserted into a cavity portion of the pneumatic tire so as to constitute a tire-wheel assembly. When the tire-wheel assembly is attached to a vehicle and the pneumatic tire runs flat during running, the punctured and crushed tire is supported by the run-flat support body, which enables run-flat running.

In the present invention, in a state before assembling of the run-flat support body to the pneumatic tire, there is at least one discontinuous spot in the circumference of the annular shell and the elastic rings, a connection structure is formed in which the butted ends of the annular shell are joined by welding, and the joining between the annular shell and the elastic rings is partially released in the vicinity of the butted position of the annular shell. Thus, when the run-flat support body is inserted into the cavity portion of the pneumatic tire and the butted ends of the annular shell are joined together by welding, the portion covered by the elastic rings can be welded while the elastic rings are retreated from the butted position of the annular shell. Therefore, since the annular shell can be welded over the entire width, the butted ends of the annular shell can be firmly joined together on the basis of the welding. Thereby, a mechanical joint component is not needed any more, which improves reliability during running and promotes weight reduction and uniform mass-distribution.

As more specific configuration, such a structure may be employed that the butted position of the elastic ring and the butted position of the annular shell are made to match each other, and the both butted ends of the elastic ring are brought into a non-joined state with respect to the annular shell, respectively. In this case, the both butted ends of the elastic ring are preferably configured capable of deformation in an axial direction of the support body, respectively.

Also, such a structure may be employed that the butted position of the elastic ring and the butted position of the annular shell are offset from each other, one of the butted ends of the elastic ring covering the butted position of the annular shell is brought into a non-joined state with respect to the annular shell and the other butted end of the elastic ring is brought into a joined state with respect to the annular shell. In this case, one of the butted ends of the elastic ring is preferably configured capable of deformation in the axial direction of the support body. Particularly, if a tapered shape or stepped shape such that the one butted end of the elastic ring overlaps the other butted end of the elastic ring from outside the rotating-shaft direction of the support body is given to an interface of the butted ends of the elastic ring, the one butted end of the elastic ring in the non-joined state can be easily deformed outward in the axial direction, and moreover, stability of the elastic ring during run-flat running can be improved.

At a portion covered by the elastic ring at one of the butted ends of the annular shell, a joining aid member overlapping the other butted end of the annular shell is preferably provided. By providing such joining aid member, the welding work of the annular shell is facilitated. A through hole is preferably provided at a portion overlapping the other butted end of the annular shell in the joining aid member. In this case, by welding the other butted end of the annular shell and the joining aid member along an inner edge portion of the through hole, diffusion of a welded portion is prevented, and an influence of heat to the periphery can be minimized. Also, a projection to be inserted into the through hole is preferably provided at a portion corresponding to the through hole in the joining aid member in the other butted end of the annular shell. By inserting the projection into the through hole of the joining aid member, positioning at the welding is facilitated.

### BRIEF DESCRIPTION OF THE DRAWINGS

Fig. 1 is a meridian sectional view illustrating an essential part of a tire-wheel assembly (wheel) including a run-flat support body according to an embodiment of the present invention.
Fig. 2 is a perspective view illustrating a state before the run-flat support body according to the embodiment of the present invention is assembled.
Fig. 3 is a plan view illustrating a state of a connection structure of the run-flat support body in the present invention seen from a rotating shaft side.
Fig. 4 is a plan view illustrating a state of another connection structure of the run-flat support body in the present invention seen from a rotating shaft side.
Fig. 5 is a plan view illustrating a state of another connection structure of the run-flat support body in the present invention seen from a rotating shaft side.
Fig. 6 is a plan view illustrating a state of another connection structure of the run-flat support body in the present invention seen from a rotating shaft side.
Fig. 7 is a plan view illustrating a state of another connection structure of the run-flat support body in the present invention seen from a rotating shaft side.
Fig. 8 is a plan view illustrating a state of another connection structure of the run-flat support body in the present invention seen from a rotating shaft side.
Fig. 9 is a sectional view on arrow X-X in Fig. 8.
Fig. 10 is a plan view illustrating a state of another connection structure of the run-flat support body in the present invention seen from a rotating shaft side.
Fig. 11 is a sectional view on arrow Y-Y in Fig. 10.

### EXPLANATION OF REFERENCE NUMERALS

- 1: wheel rim
- 2: pneumatic tire
- 3: run-flat support body
- 4: annular shell
- 41a, 41b: butted end
- 5: elastic ring
- 51a, 51b: butted end
- 6: joining aid member
- 6a: through hole
- 7: projection
- W, W1, W2, W3: welded portion

### DETAILED DESCRIPTION OF THE INVENTION

Configuration of the present invention will be described below in detail referring to the attached drawings.

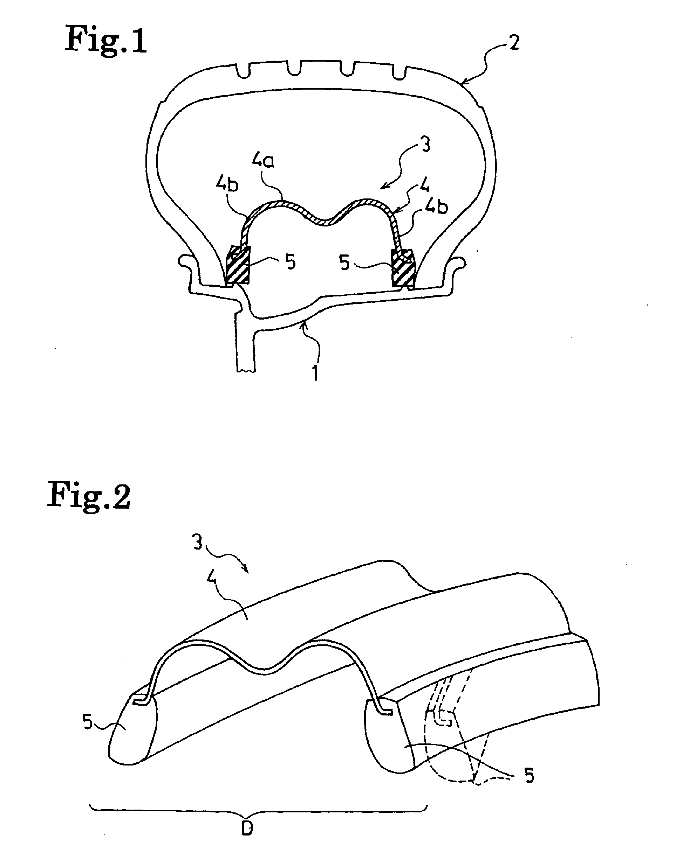

Fig. 1 is a meridian sectional view illustrating an essential part of a tire-wheel assembly (wheel) including a run-flat support body according to the embodiment of the present invention, in which reference numeral 1 denotes a wheel rim, 2 for a pneumatic tire, and 3 for a run-flat support body. The wheel rim 1, the pneumatic tire 2, and the run-flat support body 3 are formed annularly around a wheel axis, not shown.

The run-flat support body 3 is constituted by an annular shell 4 and elastic rings 5 as major parts. The run-flat support body 3 supports the crushed pneumatic tire 2 at puncture from inside though it is separated from an inner face of the pneumatic tire 2 during usual running.

The annular shell 4 has an open-leg structure in which a contact portion 4a in contact with the inner face of a punctured tire extends toward the outer periphery (outward in the radial direction) and leg portions 4b, 4b are formed along the both sides of the contact portion 4a. The contact portion 4a of the annular shell 4 is formed so that an outer surface shape in a section orthogonal to the circumferential direction is a convex curve toward the outer circumference side. It is only necessary that at least one convex curve is present, but two or more convex curves are preferably arranged side by side in the tire axial direction. By forming the contact portion 4a of the annular shell 4 so that two or more convex curves are arranged side by side, a contact spot of the contact portion 4a with the tire inner face is distributed to two or more spots and local abrasion to the tire inner face is reduced, by which a sustained distance of the run-flat running can be prolonged.

The above annular shell 4 is thin with a thickness of 0.5 to 5.0 mm and is constituted by a highly rigid material in order to support a vehicle weight through the punctured pneumatic tire 2. For the constituent material, metals and resins may be used. As the metals, steel, aluminum and the like are exemplified. As the resins, any of thermoplastic resins and thermosetting resins may be used. As the thermoplastic resins, nylon, polyester, polyethylene, polypropylene, polystyrene, polyphenylene sulfide, ABS and the like can be cited. As the thermosetting resins, epoxy resin, unsaturated polyester resin and the like can be cited. The resin may be used singularly or a fiber-reinforced resin may be used by mixing a reinforcing fiber.

The elastic ring 5 is attached to the leg portions 4b, 4b of the annular shell 4, respectively, so as to support the annular shell 4 while being in contact onto the right and left rim seats. The elastic ring 5 relaxes impact or vibration received by the annular shell 4 from the punctured pneumatic tire 2 and also stably supports the annular shell 4 by preventing slippery with respect to the rim seat.

As the constituent material of the elastic ring 5, rubber or resin may be used, and particularly, rubber is preferable. The rubber includes natural rubber (NR), isoprene rubber (IR), styrene-butadiene rubber (SBR), butadiene rubber (BR), hydrogenated NBR, hydrogenated SBR, ethylene propylene rubber (EPDM, EPM), butyl rubber (IIR), acrylic rubber (ACM), chloroprene rubber (CR), silicone rubber, fluorine rubber and the like. It is needless to say that additives such as filling agent, vulcanizing agent, vulcanization promoting agent, softener, antioxidant and the like may be mixed appropriately in these rubbers. And a desired elastic modulus can be obtained based on composition of the rubber composition.

Fig. 2 shows a state before assembling of the run-flat support body according to the embodiment of the present invention. As shown in Fig. 2, at least one discontinuous spot D is present in the circumference of the annular shell 4 and the elastic rings 5, a connection structure in which the butted ends of the annular shell 4 are joined together by welding is formed, and the joining between the annular shell 4 and the elastic ring 5 is partially released in the vicinity of the butted position of the annular shell 4. As a method of releasing the joining between the annular shell 4 and the elastic ring 5, when the annular shell 4 and the elastic ring 5 are to be integrally vulcanized, a separation sheet may be selectively placed between portions to be non-joined or an adhesive may be eliminated from the portion to be non-joined, for example.

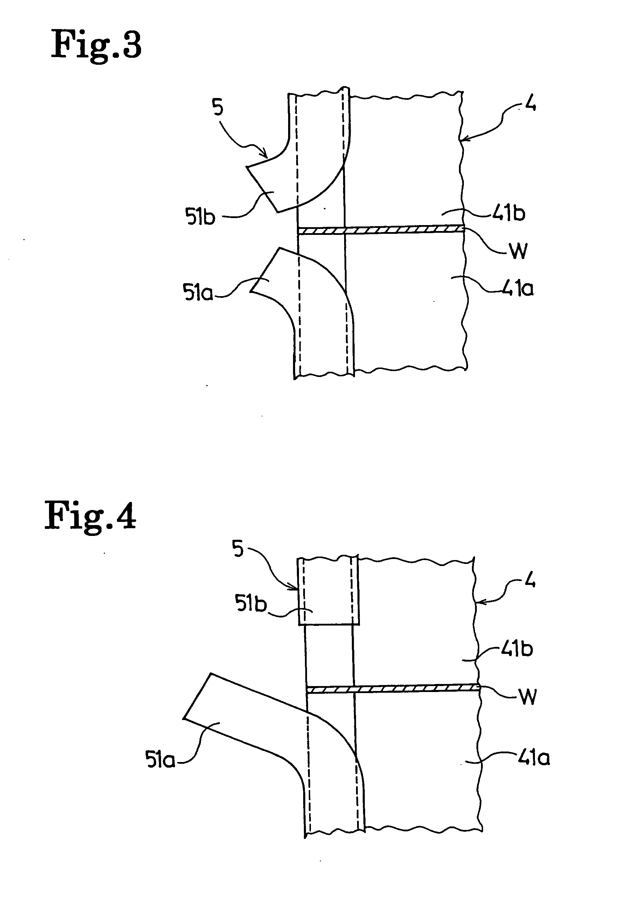

Fig. 3 shows a state of the connection structure of the run-flat support body in the present invention seen from the axis side. In Fig. 3, the butted position of the elastic ring 5 and the butted position of the annular shell 4 are matched with each other, and the both butted ends 51a, 51b of the elastic ring 5 are made a non-joined state to the annular shell 4, respectively. The butted ends 51a, 51b of the elastic ring 5 are configured capable of deformation in the axial direction of the run-flat support body 3, respectively.

In the case of the connection structure shown in Fig. 3, since the joining between the annular shell 4 and the elastic ring 5 is partially released in the vicinity of the butted position of the annular shell 4, when the run-flat support body 3 is inserted into the cavity portion of the pneumatic tire 2 and the butted ends 41a, 41b of the annular shell 4 are joined together by welding, the welding work on a portion covered by the elastic ring 5 can be carried out in a state where the butted ends 51a, 51b of the elastic ring 5 are deformed outward in the axial direction of the run-flat support body 3 and the elastic ring 5 is retreated from the butted position of the annular shell 4. Thereby, a welded portion W (shaded portion) can be formed over the entire width of the annular shell 4.

As a result, since mechanical joint components are not needed any more, reliability during running can be improved and weight reduction and uniform mass-distribution can be promoted. If the portion covered by the elastic ring 5 is not welded, strength of the annular shell runs short and run-flat durability will be lowered.

Fig. 4 shows a state of another connection structure of the run-flat support body in the present invention seen from the axis side. In Fig. 4, the butted position of the elastic ring 5 and the butted position of the annular shell 4 are offset from each other, one butted end 51a of the elastic ring 5 covering the butted position of the annular shell 4 is in a non-joined state with respect to the annular shell 4, and the other butted end 51b of the elastic ring 5 is in a joined state with respect to the annular shell 4. The butted end 51a of the elastic ring 5 is constituted capable of deformation in the axial direction of the run-flat support body 3.

In the case of the connection structure shown in Fig. 4, since the joining between the annular shell 4 and the elastic ring 5 is partially released in the vicinity of the butted position of the annular shell 4, when the run-flat support body 3 is inserted into the cavity portion of the pneumatic tire 2 and the butted ends 41a, 41b of the annular shell 4 are joined together by welding, the welding work on the portion covered by the elastic ring 5 can be performed in a state where the butted end 51a of the elastic ring 5 is deformed outward in the axial direction of the run-flat support body 3 and the elastic ring 5 is retreated from the butted position of the annular shell 4. Thereby, the welded portion W (shaded portion) can be formed over the entire width of the annular shell 4.

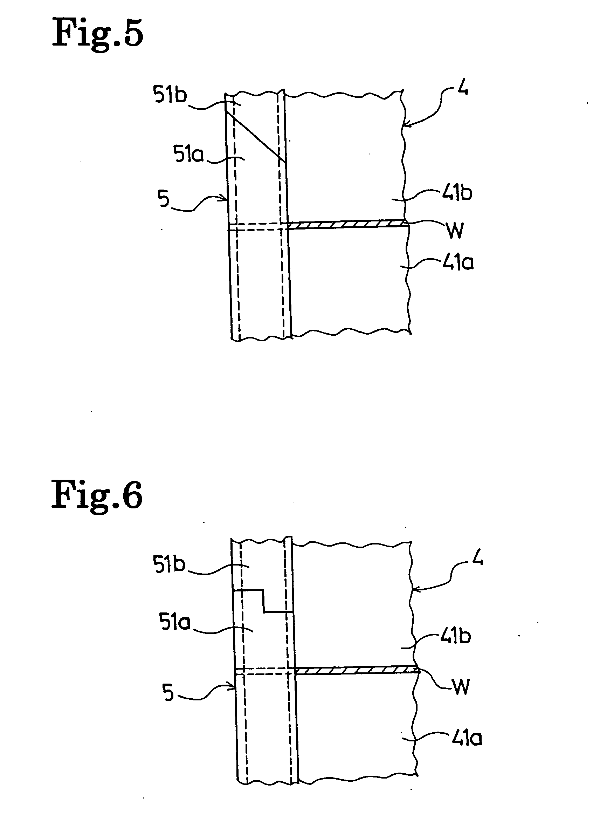

Fig. 5 shows a state of another connection structure of the run-flat support body in the present invention seen from the axis side. The connection structure of Fig. 5 is different from the connection structure of Fig. 4 in a point that a tapered shape such that the one butted end 51a of the elastic ring 5 is overlapped with the other butted end 51b of the elastic ring 5 from the outside in the axial direction of the run-flat support body 3 is given to an interface between the butted ends 51a, 51b of the elastic ring 5.

Fig. 6 shows a state of another connection structure of the run-flat support body in the present invention seen from the axis side. The connection structure of Fig. 6 is different from the connection structure of Fig. 4 in a point that a stepped shape such that the one butted end 51a of the elastic ring 5 is overlapped with the other butted end 51b of the elastic ring 5 from outside in the axial direction of the run-flat support body 3 is given to the interface between the butted ends 51a, 51b of the elastic ring 5.

In the case of the connection structures shown in Figs. 5 and 6, the butted end 51a of the elastic ring 5 in the non-joined state can be easily deformed outward in the axial direction of the run-flat support body 3 at the welding. Moreover, since the butted end 51b of the elastic ring 5 exerts a force opposing against a force that a bead portion of the rimmed pneumatic tire 2 is to move inward in the axial direction of the run-flat support body 3, stability of the elastic ring during run-flat running can be improved.

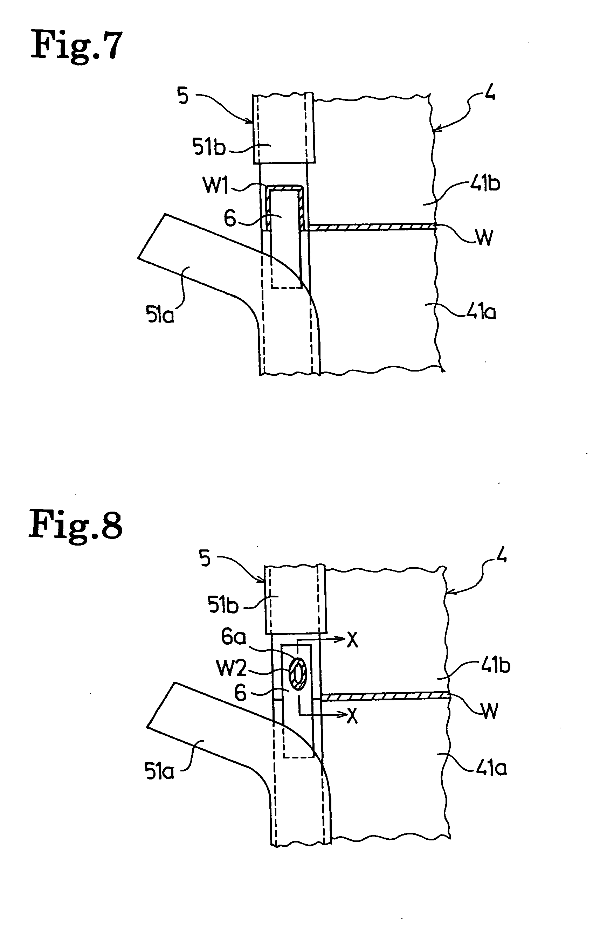

Fig. 7 shows a state of another connection structure of the run-flat support body in the present invention seen from the axis side. The connection structure of Fig. 7 is different from the connection structure of Fig. 4 in a point that a plate-shaped joining aid member 6 overlapped with the other butted end 41b of the annular shell 4 is provided at a portion covered by the elastic ring 5 at the one butted end 41a of the annular shell 4. This joining aid member 6 is joined to the inner circumferential face of the butted end 41a of the annular shell 4 in advance. At the welding, the butted end 41b of the annular shell 4 and the joining aid member 6 are welded. That is, at the portion covered by the elastic ring 5, a welded portion W1 (shaded portion) is formed around the joining aid member 6.

In the case of the connection structure shown in Fig. 7, by overlapping the joining aid member 6 on the butted end 41b of the annular shell 4 at the welding, the butted ends 41a, 41b of the annular shell 4 become hard to be offset, which facilitates the welding work of the annular shell 4.

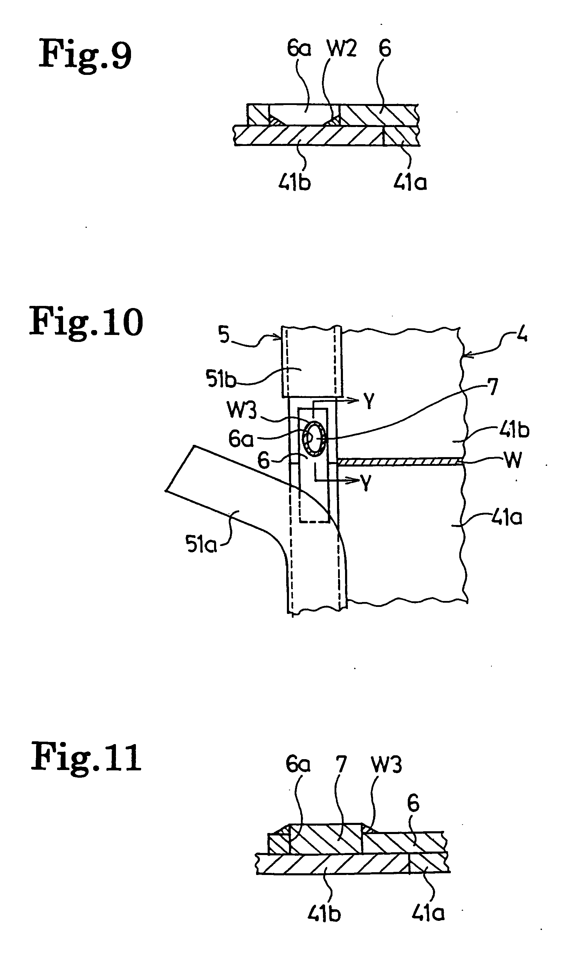

Fig. 8 shows a state of another connection structure of the run-flat support body in the present invention seen from the axis side. The connection structure of Fig. 8 is different from the connection structure of Fig. 7 in a point that a through hole 6a is provided at a portion overlapping the other butted end 41b of the annular shell 4 in the joining aid member 6. Fig. 9 is a sectional view on arrow X-X of Fig. 8 and as shown in Fig. 9, the butted end 41b of the annular shell 4 and the joining aid member 6 are welded along the inner edge portion of the through hole 6a. That is, at the portion covered by the elastic ring 5, a welded portion W2 (shaded portion) is formed along the inner edge portion of the through hole 6a of the joining aid member 6.

In the case of the connection structure shown in Figs. 8 and 9, since the welded portion W2 is formed only at a limited range, an influence of heat to the periphery can be minimized. If the welded portion is diffused more than necessary and gives a bad influence to the physical characteristics of the annular shell 4 and the elastic ring 5, the run-flat durability might be lowered.

Fig. 10 shows a state of another connection structure of the run-flat support body in the present invention seen from the axis side. The connection structure of Fig. 10 is different from the connection structure of Fig. 8 in a point that a projection 7 to be inserted into the though hole 6a is provided at the portion corresponding to the through hole 6a of the joining aid member 6 in the other butted end 41b of the annular shell 4. Fig. 11 is a sectional view on arrow Y-Y in Fig. 10 and as shown in Fig. 11, the projection 7 of the butted end 41b of the annular shell 4 and the joining aid member 6 are welded along the inner edge portion of the through hole 6a. That is, at the portion covered by the elastic ring 5, a welded portion W3 (shaded portion) is formed along the inner edge portion of the through hole 6a of the joining aid member 6.

In the case of the connection structure shown in Figs. 10 and 11, since the welded portion W3 is formed at a limited range, the influence of heat to the periphery can be minimized. Moreover, by inserting the projection 7 into the through hole 6a of the joining aid member 6, positioning at the welding is facilitated.

In each of the above-mentioned connection structures, after the annular shell 4 is welded, the portion of the elastic ring 5 not joined to the annular shell is preferably attached to the annular shell 4 as necessary, but if the non-joined portion is sufficiently short, it can be left as it is. Also, each of the above-mentioned connection structures needs to be arranged at least at a single spot on the circumference of the run-flat support body, but it may be arranged at two or more spots.

The preferred embodiment of the present invention has been described above, but it should be understood that various changes, substitution and replacement are possible as long as it does not depart from the sprint and scope of the present invention specified by the appended claims.

## Claims

1. A run-flat support body comprising a pair of elastic rings fitted to a rim of a wheel and an annular shell bridging between the elastic rings,
wherein said elastic rings and said annular shell are integrally joined, at least one discontinuous spot is provided in a circumference of said annular shell and said elastic rings, a connection structure is formed in which butted ends of said annular shell are joined by welding, and the joining between said annular shell and said elastic rings is partially released in the vicinity of the butted position of said annular shell.

2. The run-flat support body according to claim 1, wherein the butted position of said elastic ring and the butted position of said annular shell are matched with each other, and the both butted ends of said elastic ring is in a non-joined state with respect to said annular shell.

3. The run-flat support body according to claim 2, wherein the both butted ends of said elastic ring are constituted capable of deformation in an axial direction of the support body, respectively.

4. The run-flat support body according to claim 1, wherein the butted position of said elastic ring and the butted position of said annular shell are offset from each other, and one butted end of said elastic ring covering the butted position of said annular shell is in a non-joined state with respect to said annular shell while the other butted end of said elastic ring is in a joined state with respect to said annular shell.

5. The run-flat support body according to claim 4, wherein the one butted end of said elastic ring is constituted capable of deformation in an axial direction of the support body.

6. The run-flat support body according to claim 5, wherein a tapered shape or stepped shape such that the one butted end of said elastic ring is overlapped with the other butted end of the elastic ring from outside in the axial direction of the support body is given to an interface between the butted ends of said elastic ring.

7. The run-flat support body according to any one of claims 1 to 6, wherein a joining aid member overlapping the other butted end of the annular shell is provided on the one butted end of said annular ring at a portion covered by said elastic ring.

8. The run-flat support body according to claim 7, wherein a through hole is provided at a portion overlapping the other butted end of said annular shell in said joining aid member.

9. The run-flat support body according to claim 8, wherein a projection to be inserted into the through hole of said joining aid member is provided on the other butted end of said annular shell at a portion corresponding to the through hole of said joining aid member.

10. A method of assembling a run-flat support member, comprising the steps of:
inserting the run-flat support member according to any one of claims 1 to 9 into a cavity portion of a pneumatic tire, and
performing the welding work, when the butted ends of said annular shell are joined together by welding, on a portion covered by said elastic ring in a state where said elastic ring is retreated from the butted position of said annular shell.
